(19) Europäisches Patentamt

European Patent Office

Office européen des brevets

(11) **EP 1 449 066 B1**

(12) **EUROPÄISCHE PATENTSCHRIFT**

(45) Veröffentlichungstag und Bekanntmachung des Hinweises auf die Patenterteilung:
**16.11.2005   Patentblatt 2005/46**

(21) Anmeldenummer: 02796677.9

(22) Anmeldetag: **18.12.2002**

(51) Int Cl.$^7$: **G06F 7/52**

(86) Internationale Anmeldenummer:
**PCT/EP2002/014493**

(87) Internationale Veröffentlichungsnummer:
**WO 2003/060695 (24.07.2003 Gazette 2003/30)**

(54) **CARRY-SAVE-MULTIPLIZIERER**

CARRY-SAVE MULTIPLIER

MULTIPLICATEUR SANS PROPAGATION DE RETENUE

(84) Benannte Vertragsstaaten:
**DE FR IT**

(30) Priorität: **16.01.2002  DE 10201443**

(43) Veröffentlichungstag der Anmeldung:
**25.08.2004   Patentblatt 2004/35**

(73) Patentinhaber: **Infineon Technologies AG
81669 München (DE)**

(72) Erfinder:
• **GAMMEL, Berndt
  85570 Markt-Schwaben (DE)**
• **KLUG, Franz
  817397 München (DE)**
• **KNIFFLER, Oliver
  81739 München (DE)**

(74) Vertreter: **Zinkler, Franz et al
Patentanwälte Schoppe, Zimmermann,
Stöckeler & Zinkler,
Postfach 246
82043 Pullach bei München (DE)**

(56) Entgegenhaltungen:
**WO-A-01/40950          WO-A-01/54083
US-A- 5 957 999**

• **JOHN L. HENNESSY: "Computer Architecture a
  Quantitative Approach" 1996 , MORGAN
  KAUFMANN PUBLISHERS , UNITED STATES
  XP002241427 Seite 50 -Seite 51**

**Beschreibung**

Die vorliegende Erfindung bezieht sich auf Rechenwerke und insbesondere auf einen sicheren Carry-Save-Multiplizierer.

Multiplikationsalgorithmen, wie z. B. der Radix-2-Multiplikationsalgorithmus oder der Booth-Recoding-Multiplikationsalgorithmus sind in der Technik bekannt und in "Computer Architecture a Quantitative Approach", Second Edition, Hennessy und Patterson, Morgan Kaufmann Publishers, Inc., 1996, Anhang A beschrieben. Diese Multiplikationsalgorithmen erfordern zum Bilden des Produkts aus einem ersten Operanden a und einem zweiten Operanden b das Hinzuaddieren des zweiten Operanden b zu einem Multiplikationszwischenergebnis, das in einem Multiplikationszwischenergebnisregister P gespeichert, wobei dann, nach der Multiplikation bzw. Subtraktion der Inhalt des Multiplikationszwischenergebnisregisters P und der Inhalt des ersten Operandenregisters A zum Speichern des Operanden a gemeinsam um ein Bit nach rechts verschoben werden. Dann wird zum aktuellen Zwischenergebnisregister wieder der zweite Operand addiert, falls das betrachtete Bit des ersten Operanden a gleich 1 ist, woraufhin wieder eine Rechtsverschiebung folgt etc. Am Ende dieser iterativen Abarbeitung sämtlicher Bits des ersten Operanden steht im Multiplikationszwischenergebnisregister und im ersten Operandenregister das Multiplikationsergebnis.

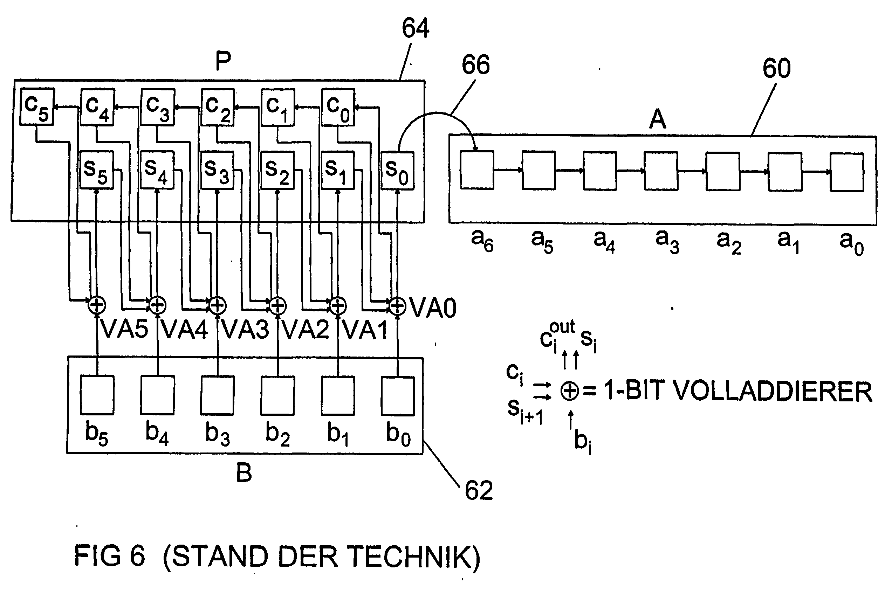

Zur Beschleunigung von Multiplikationsverfahren existieren verschiedene Algorithmen, die ebenfalls in dem oben beschriebenen Lehrbuch im Anhang A beschrieben sind. Ein schnellerer Multiplizierer ist der sogenannten Carry-Save-Multiplizierer. Ein solcher Carry-Save-Multiplizierer bzw. der wesentliche Teil desselben ist in Fig. 6 dargelegt. Ein Carry-Save-Multiplizierer ist eine Sammlung von n unabhängigen Ein-Bit-Volladdierern VA0, VA1, VA2, .... In Fig. 6 ist ferner ein erstes Operandenregister 60 (A), ein zweites Operandenregister 62 (B) sowie ein Multiplikationszwischenergebnisregister 64 (P) gezeigt. In dem zweiten Operandenregister B ist der zweite Operand b gespeichert, während zu Anfang des Multiplikationsalgorithmus im ersten Operandenregister A der erste Operand gespeichert ist. Die beiden Operanden a und b sollen multipliziert werden, um das Multiplikationsergebnis zu erhalten.

Im Multiplikationszwischenergebnisregister P, das in Fig. 6 mit dem Bezugszeichen 64 bezeichnet ist, existieren für jede Stelle 0, 1, 2, 3, ..., zwei Speicherplätze, nämlich ein erster Speicherplatz zum Speichern des Summenbits $s_i$ des Volladdierers VAi, und ein zweiter Speicherplatz zum Speichern des Übertragbits $c_i$ des Volladdierers VAi für diese Stelle. Das besondere Merkmal des Carry-Save-Multiplizierers besteht darin, daß das Summenbit $s_{i+1}$ der nächsthöheren Stelle i+1 in dem Volladdierer VAi als zweiter Eingangsoperand verwendet wird, während der Übertrag, der von dem Volladdierer VAi im vorherigen Schritt berechnet worden ist, wieder im aktuellen Schritt als Übertrag-Eingangssignal in den Ein-Bit-Volladdierer VAi eingespeist wird. Die Übertragbits der einzelnen Volladdierer $c_0$ bis $c_{n-1}$ werden somit in dem Multiplikationszwischenergebnisregister P gespeichert, weshalb dieser Multiplizierer als Carry-Save-Multiplizierer bezeichnet wird.

Ein Carry-Save-Addierer ist somit eine Sammlung von n unabhängigen Volladdierern. Jeder Volladdierer VAi ist ein Ein-Bit-Volladdierer, wobei jeder Kasten in Fig. 6 ein Bit eines Registers darstellt. Jede Additionsoperation resultiert in einem Bitpaar, das in dem Summen- und dem Carry-Teil von P gespeichert wird. Da jeder Addiervorgang unabhängig ist, sind in einem Addiervorgang nur zwei logische Ebenen betroffen, was den in Fig. 6 gezeigten Multiplizierer sehr schnell macht.

Um den Multiplizierer in Fig. 6 zu betreiben, werden zunächst die Summen- und die Übertragbits von dem Multiplikationszwischenergebnisregister P mit Nullen geladen, um eine Initialisierung zu erreichen. Dann wird die erste ALU-Operation des verwendeten Multiplikationsalgorithmus durchgeführt. Wenn ein Booth-Recoding verwendet wird, kann die erste ALU-Operation eine Subtraktion statt einer Addition sein.

Dann wird das niederstwertige Summenbit von P, wie es in Fig. 6 durch einen Pfeil 66 angedeutet ist, in das erste Operandenregister, und zwar an das höchstwertige Bit desselben, geschoben. Gleichzeitig wird das erste Operandenregister A um ein Bit nach rechts geschoben. Es sei darauf hingewiesen, daß außer dem niederstwertigen Summenbit des Multiplikationszwischenergebnisregisters P, also $s_0$, keinerlei Verschiebungen in dem Register durchgeführt werden müssen. Die Summen-Bits $s_i$ schieben sich gewissermaßen automatisch herunter, da das Summenbit der Stelle i+1 in den Operandeneingang des Volladdierers für die Stelle i eingespeist wird. Dagegen bleiben die Übertragbits $c_i$ stehen. Daher wird in Fig. 6 dieselbe Bezeichnung $c_i$ für das Übertrag-Eingangssignal und das Übertrag-Ausgangssignal verwendet, da der Volladdierer VAi auf dieselbe Carry-Speicherstelle im Multiplikationszwischenergebnisregister zugreift. Jeder Additionsschritt wird beim Carry-Save-Multiplizierer deutlich beschleunigt, da jede Addiererzelle unabhängig von den anderen Addiererzellen arbeitet und keine Übertrag-Ausbreitung auftreten muß, auf die gegebenenfalls gewartet werden müßte.

Der Carry-Save-Multiplizierer benötigt mehr Hardware, da das Multiplikationszwischenergebnisregister P im Vergleich zu einem üblichen Multiplizierer doppelt so groß sein muß. Ferner muß nach dem letzten Schritt das hochwertige Wort des Ergebnisses in einen üblichen Addierer eingespeist werden, um die Summen- und die Übertrag-Teile zu kombinieren. Dann steht in dem Multiplikationszwischenergebnisregister P und dem ersten Operandenregister A wieder das Ergebnis der Multiplikation.

Nachteilig an dem in Fig. 6 gezeigten Multiplizierer ist die Tatsache, daß er lediglich mit Klartextdaten arbeitet und daher physikalisch angreifbar ist. Die möglichen Angriffsszenarien reichen dabei von verschiedenen physikalischen Angriffsszenarien, wie z. B. Nadelangriffen, bis hin zu sogenannten indirekten Angriffen, wie z. B. SPA (SPA = Simple Power Analysis) oder DPA (DPA = Differential Power Analysis = differentielle Leistungsanalyse).

Bei dem in Fig. 6 gezeigten Multiplizierer sind drei Register, nämlich A, B und P involviert, die, wenn mit sicherheitsrelevanten Daten gerechnet wird, alle sensible Daten halten, die möglicherweise angegriffen werden können.

Um sicherere Rechenwerke zu schaffen, kann eine Dual-Rail-Precharge-Technik verwendet werden, um unabhängig von der Art der Daten das gleiche Strom-, Leistungs- oder Zeitprofil zu erhalten. Dieses Verfahren eliminiert zwar das Rechenwerk als Angriffspunkt, liefert jedoch keinen Schutz der Register vor Ausspähungen. Nachteilig ist ferner der höhere Chipflächenverbrauch, da sämtliche Rechenwerke typischerweise zweimal ausgeführt werden müssen.

Die Aufgabe der vorliegenden Erfindung besteht darin, eine sichere und effiziente Ausführung für einen Carry-Save-Multiplizierer zu schaffen.

Diese Aufgabe wird durch einen Carry-Save-Multiplizierer gemäß Patentanspruch 1 gelöst.

Der vorliegenden Erfindung liegt die Erkenntnis zugrunde, daß Sicherheit bei der Datenspeicherung in den Register A, B und P und bei der Datenübertragung zwischen den Registern und den voneinander unabhängigen Ein-Bit-Volladdierern dadurch erreicht werden kann, daß in den Registern verschlüsselte Daten abgespeichert werden, und daß diese Daten in verschlüsseltem Zustand zu den jeweiligen Volladdierern übertragen werden. Auf sämtlichen Übertragungswegen und in sämtlichen Registern finden sich daher lediglich noch verschlüsselte Daten, die nicht mehr ohne weiteres angegriffen werden können.

Erfindungsgemäß wird ferner eine bitweise Verschlüsselung der Operanden eingesetzt, wobei für jedes Operandenbit ein Verschlüsselungsparameter verwendet wird, der von Verschlüsselungsparametern für andere Operandenbits unabhängig ist. Nachdem ein Volladdierer für eine Stelle i als Eingangssignal das Summenbit der nächsthöheren Stelle i+1 erhält, wird erfindungsgemäß ferner eine Umverschlüsselungseinheit vorgesehen, um das Summenbit der Stelle i+1, das mit dem Verschlüsselungsparameter für die Stelle i+1 verschlüsselt ist, zum Gebrauch durch den Addierer für die Stelle i umzuverschlüsseln.

Prinzipiell könnte an den Eingängen des Volladdierers für die Stelle i eine Entschlüsselungseinrichtung vorhanden sein, um die Eingangsoperanden zu entschlüsseln. Dann kann die Ein-Bit-Addieroperation im Klartext durchgeführt werden, und das Klartextergebnis in Form des Summenbits und des Übertragbits können verschlüsselt werden und zu dem Multiplikationszwischenergebnisregister P übertragen werden.

Aus Sicherheitsgründen wird es jedoch bevorzugt, die Ein-Bit-Volladdiereroperation direkt unter Verwendung verschlüsselter Daten durchzuführen, um ein verschlüsseltes Summenbit und ein verschlüsseltes Übertragbit zu erzeugen, ohne daß eine Entschlüsselung am Eingang des Addierers bzw. eine Verschlüsselung am Ausgang des Addierers auftritt. Der Addieralgorithmus ist ferner vorzugsweise so ausgestaltet, daß auch keine Klartext-Zwischenergebnisse erzeugt werden, so daß an keiner Stelle des gesamten Multiplizierers Klartextdaten auftreten.

Dieser Carry-Save-Multiplizierer arbeitet vollständig im Geheimtextraum mit verschlüsselten Daten unter Verwendung von voneinander unabhängigen Verschlüsselungsparametern für die einzelnen Stellen, so daß ein hohes Sicherheitsniveau erreicht ist. Ein Angreifer müßte die Schlüssel für die einzelnen Stellen ausspähen, um mit direkten oder indirekten Angriffen Daten lesen zu können. Um dies zu erschweren, wird es ferner bevorzugt, einen häufigen Schlüsselwechsel vorzunehmen, wobei die einzelnen Verschlüsselungsparameter unter Verwendung verschiedener Zufallszahlengeneratoren erzeugt werden können.

Das solchermaßen aufgebaute Rechenwerk zum Multiplizieren zweier Operanden auf der Basis des Carry-Save-Multiplikationsalgorithmus liefert zu keinem Zeitpunkt ein Zwischenergebnis in Klartextform. Dadurch werden alle Arten von statistischen Angriffsszenarien, wie z. B. DPA oder SPA wesentlich erschwert. Das erfindungsgemäße Rechenwerk ist ferner technologieunabhängiger anwendbar als eine Fullcustom-Lösung mit Dual-Rail-Precharge-Technik und somit leichter und schneller bei einem Technologiewechsel anpaßbar.

Bevorzugte Ausführungsbeispiele der vorliegenden Erfindung werden nachfolgend Bezug nehmend auf die beiliegenden Zeichnungen detailliert erläutert. Es zeigen:

Fig. 1 ein Blockschaltbild eines Carry-Save-Multiplizierers gemäß einem bevorzugten Ausführungsbeispiel der vorliegenden Erfindung;

Fig. 2 eine Prinzipdarstellung eines kryptographischen Ein-Bit-Volladdierers;

Fig. 3 eine bevorzugte Ausführungsform für eine Schaltung zum Berechnen des Summenbits, wobei die Umverschlüsselungsfunktion und die Addiererfunktion kombiniert sind;

Fig. 4 eine bevorzugte Ausführungsform für eine Schaltung zum Berechnen eines verschlüsselten Übertragbits, wobei die Umverschlüsselung und die Addiererfunktion kombiniert sind;

Fig. 5a.     eine Schaltung gemäß einem weiteren Ausführungsbeispiel der vorliegenden Erfindung zum Berechnen des Übertragbits unter Verwendung des Schlüssels für die aktuelle Volladdiererstelle;

Fig. 5b     eine Wahrheitstabelle für die in Fig. 5a gezeigte Schaltung; und

Fig. 6     ein Blockschaltbild eines bekannten Carry-Save-Multiplizierers für Klartextdaten.

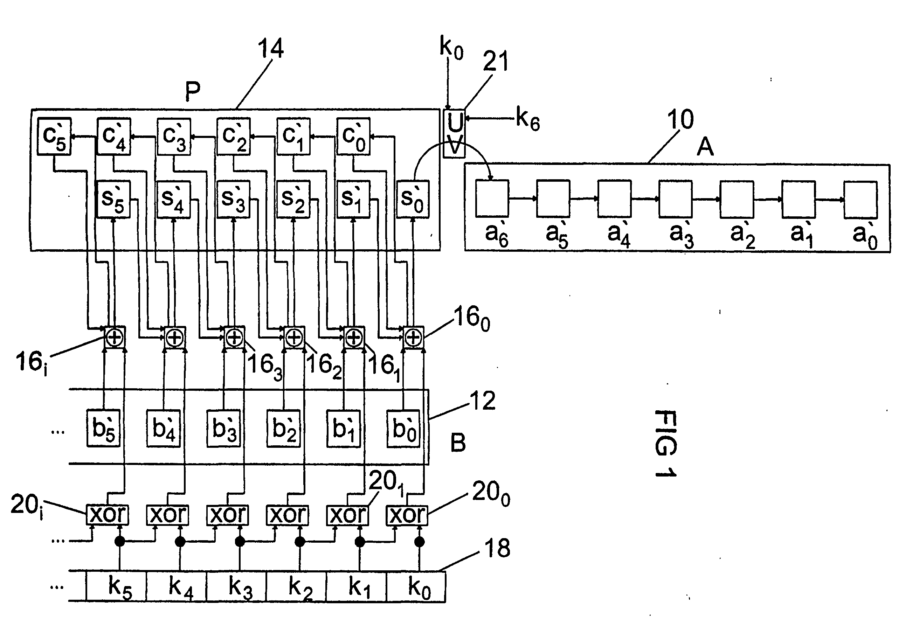

Fig. 1 zeigt einen Carry-Save-Multiplizierer gemäß einem bevorzugten Ausführungsbeispiel der vorliegenden Erfindung. Der erfindungsgemäße Carry-Save-Multiplizierer, der in Fig. 1 gezeigt ist, umfaßt ein erstes Operandenregister 10, das mit A bezeichnet ist, und das Registerplätze für Bits $a_0$, $a_1$, $a_2$, ... $a_i$, ... $a_{n-1}$ aufweist. Bei dem in Fig. 1 gezeigten Beispiel beträgt n gleich 6. Erfindungsgemäß speichert das erste Operandenregister 10 verschlüsselte Operandenbits, wie es durch den Apostroph bei jedem Bit hervorgehoben ist. Der Multiplizierer umfaßt ferner ein zweites Operandenregister 12, das in Fig. 1 mit B bezeichnet ist. Dieses Register speichert die Operandenbits $b_0'$, $b_1'$, $b_2'$, ..., $b_i'$, ... $b_{n-1}'$ des zweiten Operanden b der Multiplikation. Wie im Register A sind auch im Register B verschlüsselte Operandenbits abgelegt. Dasselbe trifft für ein Multiplikationszwischenergebnisregister 14 zu, das mit P bezeichnet ist. Das Multiplikationszwischenergebnisregister 14 umfaßt Speicherplätze zum Speichern verschlüsselter Summenbits $s_0'$, $s_1'$, $s_2'$, ... , $s_i'$, ... , $s_{n-1}'$. Ferner umfaßt das Register 14 Registerplätze zum Speichern verschlüsselter Übertragbits $c_0'$, $c_1'$, $c_2'$ , ..., $c_i'$, ... $c_{n-1}$. Für jede Stelle der Operanden a', b' ist ein Ein-Bit-Volladdierer $16_0$, $16_1$, $16_2$, $16_3$, ..., $16_i$, ..., $16_{n-1}$ vorgesehen.

Der erfindungsgemäße Carry-Save-Multiplizierer umfaßt ferner ein Schlüsselregister 18 zum Speichern der für die einzelnen Stellen verwendeten Verschlüsselungsparameter $k_0$, $k_1$, $k_2$, ..., $k_i$, ..., $k_{n-1}$. Vorzugsweise wird jede Stelle i mit einem eigenen Verschlüsselungsparameter $k_i$ verschlüsselt. Als Verschlüsselungsalgorithmus, durch den ein Operandenbit $a_i$ bzw. $b_i$ mit dem Verschlüsselungsparameter $k_i$ für diese Stelle verknüpft wird, ist prinzipiell jede umkehrbare Funktion verwendbar. Aus Gründen der schaltungstechnischen Einfachheit beim Aufbau des Rechenwerks für verschlüsselte Daten wird es bevorzugt, als Verschlüsselungsalgorithmus eine XOR- oder XNOR-Verknüpfung zu verwenden. Die Umkehrung der XOR-Verknüpfung ist ebenfalls eine XOR-Verknüpfung des verschlüsselten Bits mit dem Verschlüsselungsparameter für dieses Bit. Ein Bit wird daher vorzugsweise folgendermaßen verschlüsselt:

$$x_i' = x_i \text{ XOR } k_i.$$

In Fig. 1 ist ferner eine Umverschlüsselungseinrichtung 21 dargestellt, um das aus dem Multiplikationszwischenergebnisregister 14 herauszuschiebende niederstwertige Summenbit $s_0'$ umzuverschlüsseln, damit dieses Bit mit dem korrekten Verschlüsselungsparameter verschlüsselt ist, der für die höchstwertige Stelle des ersten Operandenregisters 10 zutreffend ist. Beim vorliegenden Beispiel hat das erste Operandenregister sieben Stellen, wobei der für die höchstwertige Stelle des Operandenregisters zuständige Verschlüsselungsparameter $k_6$ ist. Das niederstwertige Summenbit des Multiplikationszwischenergebnisregisters 14, das in Fig. 1 mit $s_0'$ bezeichnet ist, muß daher unter Verwendung der Umverschlüsselungseinheit 21 während seiner Verschiebung auf dem Register 14 heraus in das Register 10 umverschlüsselt werden. Der Umverschlüsselungs-Schlüssel ergibt sich aus der XOR-Verknüpfung des Verschlüsselungsparameters $k_0$ für die niederstwertige Stelle und des Verschlüsselungsparameters $k_6$ für die sechste Stelle, welche die Zielstelle der Verschiebung ist.

Die Bitverschiebung von verschlüsselten Bits kann entweder dadurch erreicht werden, daß das Ursprungsbit zunächst umverschlüsselt wird und dann an die Zielstelle geschoben wird, oder daß das Ursprungsbit zunächst an die Zielstelle geschoben wird und dann umverschlüsselt wird. Dieselbe Vorgehensweise ist ferner anzuwenden, wenn im Register A, das verschlüsselte Bits beinhaltet, eine Bitverschiebung durchgeführt wird. Soll in einem nächsten Schritt das höchstwertige Bit des ersten Operandenregisters $a_6'$ auf die Stelle $a_5'$ geschoben werden, so muß ebenfalls eine Umverschlüsselung des Bits $a_6'$ unter Verwendung eines Verschlüsselungsparameters durchgeführt werden, der wieder gleich der XOR-Verknüpfung der Schlüssel $k_5$ und $k_6$ ist.

Der erfindungsgemäße Multiplizierer umfaßt ferner für jede Stelle eine Umverschlüsselungseinrichtung $20_0$, $20_1$, $20_2$, ..., $20i$, ..., $20_{n-1}$. Die Umverschlüsselungseinrichtung fungiert bei dem bevorzugten Ausführungsbeispiel der vorliegenden Erfindung, bei dem eine XOR-Verknüpfung als Verschlüsselungseinrichtung verwendet wird, folgendermaßen. Die beiden Schlüssel $k_i$ und $k_{i+1}$, die bei der Umverschlüsselungsoperation betroffen sind, werden XOR-verknüpft, um einen Umverschlüsselungs-Schlüssel $t_i$ zu berechnen, der mit dem unter Verwendung des Verschlüsselungsparameters $k_{i+1}$ verschlüsselten Bits XOR-verknüpft werden muß, um dieselbe Bitordnung zu erhalten, wobei das Bit nun jedoch mit dem Verschlüsselungsparameter $k_i$ verschlüsselt ist.

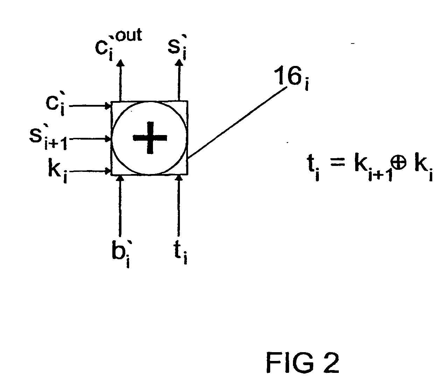

Im nachfolgenden wird auf Fig. 2 Bezug genommen, das allgemein einen Ein-Bit-Volladdierer zeigt, der als Ausgangssignale ein verschlüsseltes Summenbit $s_i'$ und ein verschlüsseltes Übertragbit $c_i'$ liefert, und der als Eingangssignal ein verschlüsseltes Bit des zweiten Operanden $b_i'$, das Übertragbit $c_i'$ aus dem Multiplikationszwischenergebnisregister 14 (Fig. 1) sowie das verschlüsselte Summenbit $s'_{i+1}$ erhält, das im vorherigen Iterationsschritt von dem Volladdierer $16_{i+1}$ der um eine Ordnung höheren Stufe erzeugt worden ist. Damit eine gleiche Schlüsselbasis innerhalb des Volladdierers $16_i$ existiert, muß das verschlüsselte Summenbit $s'_{i+1}$ der nächsthöheren Stufe auf den Verschlüsselungsparameter $k_i$ der aktuellen Stufe umverschlüsselt werden. Daher erhält der Ein-Bit-Volladdierer $16_i$ auch einen Umverschlüsselungs-Schlüssel $t_i$, der, wie es ausgeführt worden ist, aus der XOR-Verknüpfung der beiden beteiligten Verschlüsselungsparameter $k_i$ und $k_{i+1}$ berechnet wird.

Der Ein-Bit-Volladdierer, der in Fig. 2 gezeigt ist, kann verschiedene Formen annehmen, so lange er aus den in Fig. 2 gezeigten Eingangssignalen die in Fig. 2 gezeigten Ausgangssignale erzeugt. Prinzipiell könnte der Ein-Bit-Volladdierer 16i, der lediglich verschlüsselte Eingangsdaten empfängt, intern einen Ein-Bit-Volladdierer üblichen Aufbaus für Klartextdaten umfassen. Dann müßten sämtliche Eingangsdaten innerhalb des Ein-Bit-Volladdierers $16_i$ unter Verwendung des Verschlüsselungsparameters $k_i$ entschlüsselt werden, um das Übertragbit $c_i$ im Klartext und das Summenbit $s_i$ im Klartext zu berechnen. Bevor das Übertragbit und das Summenbit dann zum Register 14 übertragen werden, würde eine Verschlüsselungseinheit vorgesehen sein, die unter Verwendung des Verschlüsselungsparameters $k_i$ diese Klartext-Ergebnisbits verschlüsselt, um das verschlüsselte Summenbit $s'_i$ und das verschlüsselte Übertragbit $c'_i$ zu erhalten, die in verschlüsselter Form zum Multiplikationszwischenergebnisregister 14 übertragen werden, um dort in verschlüsselter Form abgespeichert zu werden.

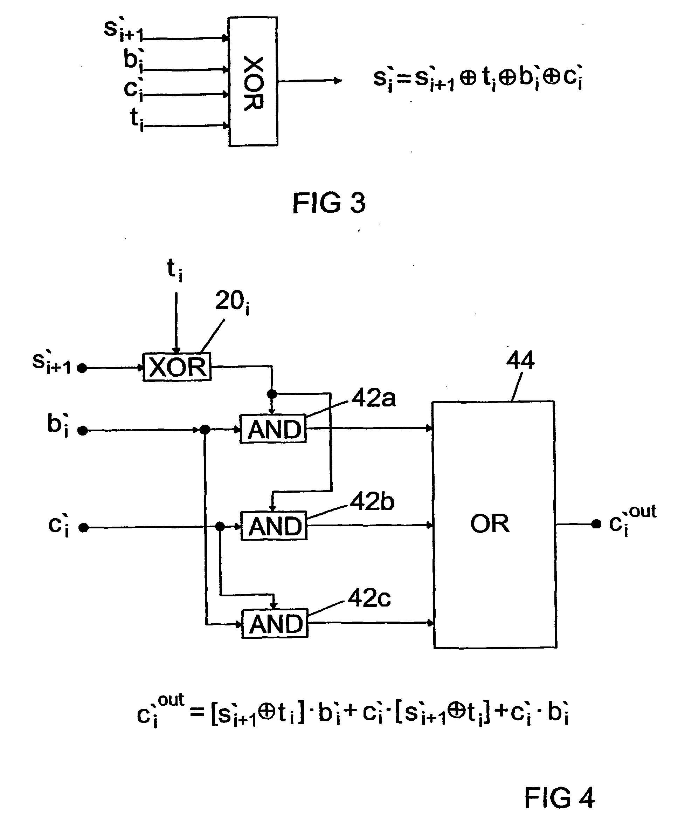

Bei einem bevorzugten Ausführungsbeispiel der vorliegenden Erfindung findet innerhalb des Ein-Bit-Volladdierers $16_i$ jedoch keine Entschlüsselung bzw. Verschlüsselung statt, sondern der Ein-Bit-Volladdierer arbeitet direkt auf der Basis verschlüsselter Eingangsdaten, um verschlüsselte Ausgangsdaten zu liefern, ohne daß Klartext-Zwischenergebnisse berechnet werden. Eine Schaltung zum Berechnen eines verschlüsselten Summenbits $s_i'$ direkt aus den verschlüsselten Eingangssignal $s'_{i+1}$, $b'_i$, $c'_i$ und $t_i$ ist in Fig. 3 gezeigt. Ein verschlüsseltes Summenbit $s'_i$ wird durch XOR-Verknüpfung der Eingangssignale erreicht. Es ist zu sehen, daß bei der in Fig. 3 gezeigten Schaltung zur Berechnung eines verschlüsselten Summenbits keinerlei Entschlüsselungen bzw. Zwischenergebnisse im Klartextraum erzeugt werden. Daher kann ein Angreifer auch an keiner Stelle Klartextergebnisse ausspähen.

Fig. 4 zeigt eine beispielhafte Schaltung zum Berechnen eines verschlüsselten Übertragbits $c_i'^{out}$ unter Verwendung der verschlüsselten Eingangssignale $s'_{i+1}$, $b'_i$, $c'_i$. Ferner benötigt die in Fig. 4 gezeigte Schaltung ebenso wie die in Fig. 3 gezeigte Schaltung den Umverschlüsselungs-Schlüssel $t_i$, der berechnet wird, wie es Bezug nehmend auf Fig. 2 dargestellt worden ist. Die in Fig. 4 gezeigte Schaltung implementiert die unterhalb der Schaltung in Fig. 4 gezeigte logische Gleichung und umfaßt hierzu als Umverschlüsselungseinrichtung ein XOR-Gatter 20i, drei UND-Gatter 42a, 42b und 42c sowie schließlich ein OR-Gatter 44, die, wie es in Fig. 4 gezeigt ist, miteinander verdrahtet sind. Am Ausgang des OR-Gatters 44 ergibt sich das verschlüsselte Übertragbit $c_i'^{out}$. Es sei darauf hingewiesen, daß bei der in Fig. 4 gezeigten Schaltung zum Berechnen des verschlüsselten Übertragbits $c_i'^{out}$ der Schlüssel $k_i$ für die Stelle i nicht explizit benötigt wird, sondern lediglich implizit innerhalb des Umverschlüsselungsschlüssels $t_i$.

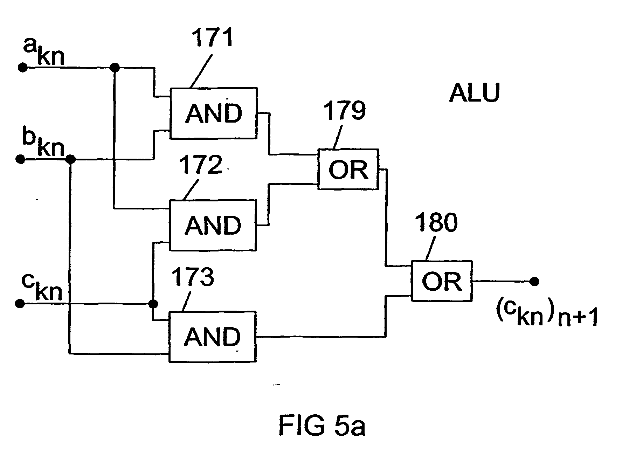

Eine weitere Implementation einer Schaltung zum Berechnen des Übertrags unter Verwendung lediglich verschlüsselter Daten $a_k$ und des Verschlüsselungsparameters k ist in Fig. 5a gezeigt. Bei dieser Schaltung wird der Schlüssel k für die aktuelle Stelle benötigt, es wird jedoch kein Zwischenergebnis in Klartextform der Parameter a, b oder c berechnet.

Im nachfolgenden wird auf Fig. 5a Bezug genommen, um als Beispiel für einen Addierer eine verschlüsselte Drei-Operanden-Operation zwischen den Operanden a, b und c zu zeigen. Bestimmungsgleichung hierfür ist die nachfolgende Gleichung:

$$s_{k_n} = a_{k_n} \oplus b_{k_n} \oplus c_{k_n} = a_n \oplus k_n \oplus b_n \oplus k_n \oplus c_n \oplus k_n =$$

$$= a_n \oplus b_n \oplus c_n \oplus k_n$$

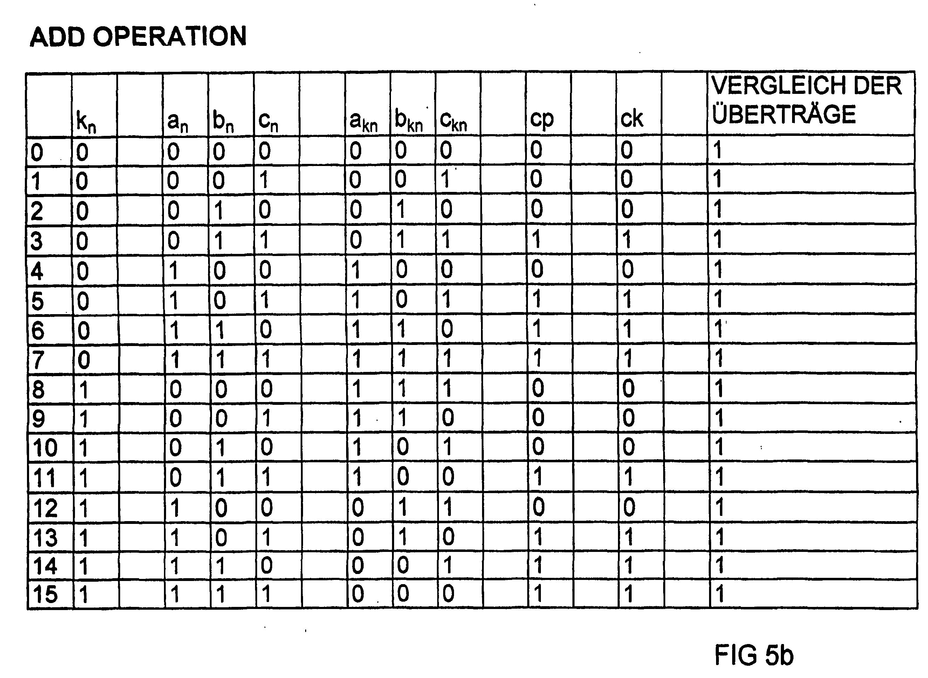

Die Operation von drei Operanden bzw. von drei Bits von Operanden, wenn ein Bit-Slice eines Addierers betrachtet wird, führt zu einem Übertrag c, wobei in der vorletzten Spalte und der drittletzten Spalte der in Fig. 5b gezeigten Wahrheitstabelle die Überträge bei der ADD-Operation zwischen dem unverschlüsselten Operanden a, b und c als cp aufgeführt ist, wobei p für "plain" = unverschlüsselt steht, und wobei in der vorletzten Zeile der Übertrag der ADD-Operation der erfindungsgemäßen ALU ck gezeigt ist. Der Übertrag $ck_{(n+1)}$ ergibt sich durch folgende Gleichung:

$$(c_{kn})_{n+1} = a_{k_n} b_{k_n} + a_{k_n} c_{k_n} + b_{k_n} c_{k_n}$$

Eine Implementierung dieser Gleichung ist in Fig. 5a dargestellt. Die ALU von Fig. 5a für ein Rechenwerk umfaßt wiederum eine Vielzahl von arithmetischen Unteroperationen, nämlich AND-Operationen 171 bis 173 und OR-Operationen 179 und 180. Ausgangsseitig ergibt sich dann der Übertrag $(ckn)_{n+1}$ für die ADD-Verknüpfung der drei Eingangs-Operanden, welcher wieder gemäß der in Fig. 5b gezeigten Wahrheitstabelle mit dem Übertrag übereinstimmt, wenn die drei Operanden in unverschlüsselter Form addiert werden und dann verschlüsselt werden. Insbesondere bedeutet $(ckn)_{n+1}$ den Übertrag (Carry-In) für die nächsthöhere ((n+1)-te) Position (Bit-Slice), verschlüsselt mit dem Schlüssel $k_n$, al-

so mit dem Schlüssel der aktuellen Position n, also nicht verschlüsselt mit dem Schlüssel $k_{n+1}$ für die nächsthöhere Position. Dies bedeutet, daß je nach Ausführung eines Bit-Slices eine Umverschlüsselung von $(ckn)_{n+1}$ vom Schlüssel $k_n$ in den Schlüssel $k_{n+1}$ stattfinden wird.

Die beiden letzgenannten Gleichungen geben eine Implementation für einen Addierer mit verschlüsselten Operanden vor, der ein verschlüsseltes Summenbit s' (s' = $s_{kn}$) und ein verschlüsseltes Übertragbit c' (c' = $(ckn)_{n+1}$) ausgibt, wobei derselbe eingangsseitig neben den beiden verschlüsselten Operanden ein verschlüsseltes Übertrageingangsbit erhält. Ein solcher Addierer wird im Stand der Technik auch als Ein-Bit-Volladdierer bezeichnet und kann als Addiereinrichtung $16_0$, $16_1$, ... (Fig. 1) verwendet werden.

Für Fachleute ist es offensichtlich, daß beliebige alternative Verschlüsselungsalgorithmen statt der XOR-Verknüpfung als Verschlüsselungsalgorithmus verwendet werden können. Im wesentlichen gleichwertig zur XOR-Verknüpfung als Verschlüsselungsalgorithmus ist die XNOR-Verknüpfung als Verschlüsselungsalgorithmus, wobei der Schaltungsaufwand zur Implementation des Ein-Bit-Volladdierers 16i für verschlüsselte Daten der gleiche ist. Für kompliziertere Verschlüsselungsalgorithmen wird sich ein anderer Aufbau für den Ein-Bit-Volläddierer $16_i$ (Fig. 2) ergeben, um aus verschlüsselten Eingangsdaten verschlüsselte Ausgangsdaten zu berechnen. Ferner sei darauf hingewiesen, daß die in Fig. 3 und Fig. 4 gezeigten logischen Gleichungen je nach Technologie auf eine Vielzahl verschiedener Arten und Weisen implementiert werden können, die sich aus Umformungen unter Verwendung von Rechenvorschriften für logische Gleichungen aus den in den Fig. 3 und 4 gezeigten Gleichungen ergeben. So können diese Gleichungen, wie es bekannt ist, für bestimmte Technologien und hauptsächliche Verwendung von NOR- bzw. NAND-Gattern ausgedrückt werden, woraus sich eine Schaltungsimplementation ergibt, die eine andere Anzahl und Art von Gattern hat, die jedoch dieselbe Funktion erfüllen, nämlich aus verschlüsselten Eingangsdaten ein verschlüsseltes Summenbit und ein verschlüsseltes Übertragbit zu berechnen.

In Fig. 1 ist ferner eine Umverschlüsselungseinrichtung 21 dargestellt, um das aus dem Multiplikationszwischenergebnisregister 14 herauszuschiebende niederstwertige Summenbit $s'_0$ umzuverschlüsseln, damit dieses Bit mit dem korrekten Verschlüsselungsparameter verschlüsselt ist, der für die höchstwertige Stelle des ersten Operandenregisters 10 zutreffend ist. Beim vorliegenden Beispiel hat das erste Operandenregister sieben Stellen, wobei der für die höchstwertige Stelle des Operandenregisters zuständige Verschlüsselungsparameter $k_6$ ist. Das niederstwertige Summenbit des Multiplikationszwischenergebnisregisters 14, das in Fig. 1 mit $s'_0$ bezeichnet ist, muß daher unter Verwendung der Umverschlüsselungseinheit 21 während seiner Verschiebung auf dem Register 14 heraus in das Register 10 umverschlüsselt werden. Der Umverschlüsselungs-Schlüssel ergibt sich aus der XOR-Verknüpfung des Verschlüsselungsparameters $k_0$ für die niederstwertige Stelle und des Verschlüsselungsparameters $k_6$ für die sechste Stelle, welche die Zielstelle der Verschiebung ist. Die Bitverschiebung von verschlüsselten Bits kann entweder dadurch erreicht werden, daß das Ursprungsbit zunächst umverschlüsselt wird und dann an die Zielstelle geschoben wird, oder daß das Ursprungsbit zunächst an die Zielstelle geschoben wird und dann umverschlüsselt wird. Dieselbe Vorgehensweise ist ferner anzuwenden, wenn im Register A, das verschlüsselte Bits beinhaltet, eine Bitverschiebung durchgeführt wird. Soll in einem nächsten Schritt das höchstwertige Bit des ersten Operandenregisters $a'_6$ auf die Stelle $a'_5$ geschoben werden, so muß ebenfalls eine Umverschlüsselung des Bits $a'_6$ unter Verwendung eines Verschlüsselungsparameters durchgeführt werden, der wieder gleich der XOR-Verknüpfung der Schlüssel $k_5$ und $k_6$ ist.

Bezugszeichenliste

| | |
|---|---|
| 10 | erstes Operandenregister |
| 12 | zweites Operandenregister |
| 14 | Multiplikationszwischenergebnisregister |
| $16_0$,$16_1$, ... | Ein-Bit-Volladdierer |
| 18 | Schlüsselregister |
| $20_0$,$20_1$, ... | Umverschlüsselungseinrichtung |
| 21 | Umverschlüsselungseinrichtung |
| 40a,40b | NOT-Gatter |
| 42a,42b,42c | AND-Gatter |
| 60 | erstes Operandenregister |
| 62 | zweites Operandenregister |
| 64 | Multiplikationszwischenergebnisregister |
| 66 | Rechtsverschiebung |
| 171-173 | AND-Gatter |
| 179-180 | OR-Gatter |

**Patentansprüche**

1. Carry-Save-Multiplizierer mit folgenden Merkmalen:

einem ersten Operandenregister (10) mit einer Mehrzahl von Stellen;

einem zweiten Operandenregister (12) mit einer Mehrzahl von Stellen von einer Ordnung 0 bis zu einer Ordnung n-1;

einem Multiplikationszwischenergebnisregister (14) zum Speichern einer Mehrzahl von Summenbits von einer Ordnung 0 bis zu einer Ordnung n-1 und einer Mehrzahl von Übertragbits von einer Ordnung 0 bis zu einer Ordnung n-1;

einer Mehrzahl von Ein-Bit-Volladdierern von einer Ordnung 0 bis zu einer Ordnung n-1, wobei ein Ein-Bit-Volladdierer $16_i$ der Mehrzahl von Volladdierern für eine Ordnung i folgende Merkmale aufweist:

einen ersten Eingang für eine Stelle $b'_i$ des zweiten Operandenregisters (12) mit der Ordnung i;

einen zweiten Eingang für ein Übertragbit $c'_i$ der Ordnung i;

einen dritten Eingang für ein Summenbit $s'_{i+1}$ der Ordnung i+1;

einen ersten Ausgang für ein Summenbit $s'_i$ der Ordnung i, und

einen zweiten Ausgang für ein Übertragbit $c'_i$ der Ordnung i,

wobei das erste Operandenregister (10), das zweite Operandenregister (12) und das Multiplikationszwischenergebnisregister (14) angeordnet sind, um verschlüsselte Zahlen zu speichern, die bitweise unter Verwendung eines Verschlüsselungsparameters $k_i$ für ein Bit der Ordnung i verschlüsselt sind, und wobei für die Ordnung i eine Umverschlüsselungseinheit ($20_i$) vorgesehen ist, um ein verschlüsseltes Summenbit $s'_{i+1}$ der Ordnung i+1, das mit einem Verschlüsselungsparameter $k_{i+1}$ für die Ordnung i+1 verschlüsselt ist, so umzuverschlüsseln, daß es mit einem Verschlüsselungsparameter $k_i$ für die Ordnung i verschlüsselt ist.

2. Carry-Save-Multiplizierer nach Anspruch 1, bei dem ferner eine Umverschlüsselungseinheit (21) vorgesehen ist, um unter Verwendung eines Verschlüsselungsparameters $k_0$ für eine Ordnung 0 und eines Verschlüsselungsparameters $k_{n+1}$ für ein höchstwertiges Bit des ersten Operandenregisters (10) ein zu verschiebendes Summenbit des Ein-Bit-Volladdierers ($16_0$) für die Ordnung 0 umzuverschlüsseln.

3. Carry-Save-Multiplizierer nach Patentanspruch 2, bei dem bei einem Schiebevorgang des verschlüsselten niederstwertigen Bits des Multiplikationszwischenergebnisregisters (14) auf ein höchstwertiges Bit des ersten Operandenregisters (10) entweder zunächst eine Umverschlüsselung und dann eine Bitverschiebung vorgenommen wird, oder zunächst eine Bitverschiebung und dann eine Umverschlüsselung vorgenommen wird.

4. Carry-Save-Multiplizierer nach einem der vorhergehenden Ansprüche, bei dem die Mehrzahl von Ein-Bit-Volladdierern Ein-Bit-Volladdierer für verschlüsselte Daten sind, die unter Verwendung verschlüsselter Eingangsdaten und eines Verschlüsselungsschlüssels verschlüsselte Ausgangdaten liefern, ohne daß ein Zwischenergebnis in Klartextform generiert wird, wobei die Umverschlüsselungseinheit (20i) einen ersten Teil außerhalb eines jeweiligen Ein-Bit-Volladdierers aufweist, die zur Erzeugung eines Umverschlüsselungsschlüssels vorgesehen ist, und wobei die Umverschlüsselungseinheit ferner einen zweiten Teil aufweist, der in den Ein-Bit-Volladdierer integriert ist und dafür vorgesehen ist, die Umverschlüsselung durchzuführen.

5. Carry-Save-Multiplizierer nach einem der vorhergehenden Ansprüche, bei dem die Verschlüsselung der Zahlen auf einer bitweisen XOR-Verknüpfung einer unverschlüsselten Zahl mit Verschlüsselungsparametern $k_i$ für die Stellen der Zahl basiert.

6. Carry-Save-Multiplizierer nach Patentanspruch 5, bei dem die Umverschlüsselungseinheit ($20_i$) vorgesehen ist, um eine Umverschlüsselung durchzuführen, indem ein verschlüsseltes Bit mit der Ordnung i+1 mit einem Umverschlüsselungsschlüssel $t_i$ XOR-verknüpft wird, wobei der Umverschlüsselungs-Schlüssel $t_i$ mittels einer XOR-Verknüpfung des Verschlüsselungsparameters $k_i$ für die Ordnung i und des Verschlüsselungsparameters $k_{i+1}$ für die Ordnung i+1 berechenbar ist.

7. Carry-Save-Multiplizierer nach Patentanspruch 6, bei dem die Umverschlüsselungseinheit ($20_i$) für die Ordnung i und der Ein-Bit-Volladdierer ($16_i$) für die Ordnung i kombiniert sind, und eine Einrichtung zum Berechnen eines verschlüsselten Summenbits $s'_i$ aufweisen, durch die die folgende Gleichung ausführbar ist:

$$S_i = s'_{i+1} \oplus b'_i \oplus c'_i \oplus t_i,$$

wobei $s'_i$ ein verschlüsseltes Summenbit der Ordnung i ist;
wobei $s'_{i+1}$ ein verschlüsseltes Summenbit der Ordnung i+1 ist;
wobei $b'_i$ ein verschlüsseltes Operandenbit des zweiten Operanden der Ordnung i ist; wobei $c'_i$ ein verschlüsseltes Übertragbit der Ordnung i ist, und wobei $t_i$ ein Umverschlüsselungs-Schlüssel für die Ordnung i ist, der durch XOR-Verknüpfung eines Verschlüsselungsparameters $k_i$ für die Ordnung i und eines Verschlüsselungsparameters $k_{i+1}$ für die Ordnung i+1 berechenbar ist.

**8.** Carry-Save-Multiplizierer nach Anspruch 5, 6 oder 7,
bei dem die Umverschlüsselungseinrichtung (20i) für die Ordnung i und der Ein-Bit-Volladdierer ($16_i$) für die Ordnung i kombiniert sind und eine Einrichtung zum Berechnen eines verschlüsselten Übertragbits ($c'^{out}_i$) aufweisen, durch die folgende Gleichung ausführbar ist:

$$c'^{out}_i = [s'_{i+1} \oplus t_i]b_i' + c_i' \cdot [s'_{i+1} \oplus t_i] + c_i' \cdot b_i'$$

wobei $s'_i$ ein verschlüsseltes Summenbit der Ordnung i ist,
wobei $s'_{i+1}$ ein verschlüsseltes Summenbit der Ordnung i+1 ist,
wobei $b'_i$ ein verschlüsseltes Operandenbit des zweiten Operanden der Ordnung i ist, wobei $c'^{out}_i$ ein verschlüsseltes Übertragbit der Ordnung i ist, und wobei $t_i$ ein Umverschlüsselungs-Schlüssel für die Ordnung i ist, der durch XOR-Verknüpfung eines Verschlüsselungsparameters $k_i$ für die Ordnung i und eines Verschlüsselungsparameters $k_{i+1}$ für die Ordnung i+1 berechenbar ist.

**Claims**

**1.** Carry save multiplier, comprising:

> a first operand register (10) having a plurality of digits;
>
> a second operand register (12) having a plurality of digits of an order of 0 to an order of n-1;
>
> a multiplication intermediate result register (14) for storing a plurality of sum bits of an order of 0 to an order of n-1 and a plurality of carry bits of an order of 0 to an order of n-1;
>
> a plurality of one-bit full adders of an order of 0 to an order of n-1, wherein a one-bit full adder $16_i$ of the plurality of full adders for an order i comprises:
>
>> a first input for a digit $b'_i$ of the second operand register (12) with the order i;
>>
>> a second input for a carry bit $c'_i$ of the order i;
>>
>> a third input for a sum bit $s'_{i+1}$ of the order i+1;
>>
>> a first output for a sum bit $s'_i$ of the order i; and
>>
>> a second output for a carry bit $c'_i$ of the order i,
>
> wherein the first operand register (10), the second operand register (12) and the multiplication intermediate result register (14) are arranged in order to store encrypted numbers which are encrypted bit-wise using a encryption parameter $k_i$ for a bit of the order i, and
> wherein for the order i a re-encryption unit ($20_i$) is provided in order to re-encrypt an encrypted sum bit $s'_{i+1}$ of the order i+1 which is encrypted with an encryption parameter $k_{i+1}$ for the order i+1, so that it is encrypted with an encryption parameter $k_i$ for the order i.

**2.** Carry save multiplier according to claim 1,
wherein further a re-encryption unit (21) is provided in order to re-encrypt a sum bit to be shifted of the one-bit full adder ($16_0$) for the order 0 using an encryption parameter $k_0$ for an order 0 and an encryption parameter $k_{n+1}$ for a most significant bit of the first operand register (10).

**3.** Carry save multiplier according to claim 2,
wherein in a shifting operation of the encrypted least significant bit of the multiplication intermediate result register (14) to a most significant bit of the first operand register (10) either first a re-encryption and then a bit shifting is performed, or first a bit shifting and then a re-encryption is performed.

**4.** Carry save multiplier according to one of the preceding claims,
wherein the plurality of one-bit full adders is one-bit full adders for encrypted data that provide encrypted output data using encrypted input data and an encryption key, without an intermediate result being generated in plain text form, wherein the re-encryption unit ($20_i$) comprises a first part outside a respective one-bit full adder which is provided for generating a re-encryption key, and wherein the re-encryption unit further comprises a second part integrated into the one-bit full adder and provided to perform the re-encryption.

**5.** Carry save multiplier according to one of the preceding claims,
wherein the encryption of the numbers is based on a bit-wise XORing of a non-encrypted number with encryption parameters $k_i$ for the digits of the number.

**6.** Carry save multiplier according to claim 5, wherein the re-encryption unit ($20_i$) is provided in order to perform a re-encryption by XORing an encrypted bit with the order i+1 with a re-encryption key $t_i$, wherein the re-encryption key $t_i$ may be calculated using an XOR operation of the encryption parameter $k_i$ for the order i and the encryption parameter $k_{i+1}$ for the order i+1.

**7.** Carry save multiplier according to claim 6, wherein the re-encryption unit ($20_i$) for the order i and the one-bit full adder ($16_i$) for the order i are combined and comprise means for calculating an encrypted sum bit $s'_i$, by which the following equation may be performed:

$$s_i = s'_{i+1} \oplus b'_i \oplus c'_i \oplus t_i,$$

wherein $s'_i$ is an encrypted sum bit of the order i; wherein $s'_{i+1}$ is an encrypted sum bit of the order i+1; wherein $b'_i$ is an encrypted operand bit of the second operand of the order i; wherein $c'_i$ is an encrypted carry bit of the order i, and wherein $t_i$ is a re-encryption key for the order i that may be calculated by XORing an encryption parameter $k_i$ for the order i and an encryption parameter $k_{i+1}$ for the order i+1.

**8.** Carry save multiplier according to claim 5, 6 or 7, wherein the re-encryption means (20i) for the order i and the one-bit full adder ($16_i$) for the order i are combined and comprise means for calculating an encrypted carry bit ($c'^{out}_i$), by which the following equation may be performed:

$$c'^{out}_i = [s'_{i+1} \oplus t_i]\, b'_i + c'_i \cdot [s'_{i+1} \oplus t_i] + c'_i \cdot b'_i$$

wherein $s'_i$ is an encrypted sum bit of the order i, wherein $s'_{i+i}$ is an encrypted sum bit of the order i+1, wherein $b'_i$ is an encrypted operand bit of the second operand of the order i, wherein $c'^{out}_i$ is an encrypted carry bit of the order i, and wherein $t_i$ is a re-encryption key for the order i which may be calculated by XORing an encryption parameter $k_i$ for the order i and an encryption parameter ki+i for the order i+1.

**Revendications**

**1.** Multiplicateur sans propagation de retenue ayant des caractéristiques suivantes :

un premier registre (10) d'opérandes ayant une pluralité de positions ;
un deuxième registre (12) d'opérandes ayant une pluralité de positions d'un ordre 0 à un ordre n-1 ;
un registre (14) de résultats intermédiaires de multiplication pour mémoriser une pluralité de bits sommes d'un ordre 0 à un ordre n-1 et une pluralité de bits de retenue d'un ordre 0 à un ordre n-1 ;:
une pluralité d'additionneurs complets de bits un d'un ordre 0 à un ordre n-1, un additionneur $16_i$ complet de bits un de la pluralité d'additionneurs complets pour un ordre i ayant les caractéristiques suivantes :

une première entrée pour une position $b'_i$ du deuxième registre (12) d'opérandes ayant l'ordre i ;
une deuxième entrée pour un bit $c'_i$ de retenue de l'ordre i ;
une troisième entrée pour un bit $s'_{i+1}$ de somme de l'ordre i+1 ;
une première sortie pour un bit $s'_i$ de somme de l'ordre i;
et
une deuxième sortie pour un bit $c'_i$ de retenue de l'ordre i,

dans lequel le premier registre (10) d'opérandes, le deuxième registre (12) d'opérandes et le registre (14) de résultats intermédiaires de multiplication sont disposés pour mémoriser des nombres chiffrés, qui sont chiffrés bit par bit, en utilisant un paramètre $k_i$ de chiffrement pour un bit de l'ordre i, et dans lequel il est prévu, pour l'ordre i, une unité ($20_i$) de rechiffrement pour rechiffrer un bit $s'_{i+1}$ de somme chiffré de l'ordre i+1 qui est chiffré par un paramètre $k_{i+1}$ de chiffrement pour l'ordre i+1, de façon à ce qu'il soit chiffré par un paramètre $k_i$ de chiffrement pour l'ordre i.

**2.** Multiplicateur sans propagation de retenue suivant la revendication 1, dans lequel il est prévu, en outre, une unité (21) de rechiffrement pour rechiffrer, en utilisant un paramètre $k_0$ de chiffrement pour un ordre 0 et un paramètre $k_{n+1}$ de chiffrement pour un bit de poids le plus fort du premier registre (10) d'opérandes, un bit somme à décaler de l'additionneur ($16_0$) complet de bits un pour l'ordre 0.

**3.** Multiplicateur sans propagation de retenue suivant la revendication 2, dans lequel, pour une opération de décalage du bit chiffré de poids le plus faible du registre (14) de résultat intermédiaire de multiplication vers un bit de poids le plus fort du premier registre (10) d'opérandes, on effectue soit d'abord un rechiffrement et ensuite un décalage de bit, soit on effectue d'abord un décalage de bit et ensuite un rechiffrement.

**4.** Multiplicateur sans propagation de retenue suivant l'une des revendications précédentes, dans lequel la pluralité d'additionneurs complets de bits un sont des additionneurs complets de bits un pour des données chiffrées qui fournissent, en utilisant des données d'entrée chiffrées et une clé de chiffrement, des données de sortie chiffrées sans engendrer un résultat intermédiaire en texte clair, l'unité $(20_i)$ de rechiffrement ayant une première partie à l'extérieur d'un additionneur complet de bits un respectif qui est prévu pour la production d'une clé de rechiffrement, et l'unité de rechiffrement ayant en outre une deuxième partie qui fait partie intégrante de l'additionneur complet de bits un et qui est prévue pour effectuer le rechiffrement.

**5.** Multiplicateur sans propagation de retenue suivant l'une des revendications précédentes, dans lequel le chiffrement des nombres repose sur une combinaison logique OU EXCLUSIVE bit par bit d'un nombre non chiffré par des paramètres $k_i$ de chiffrement pour les positions du nombre.

**6.** Multiplicateur sans propagation de retenue suivant la revendication 5, dans lequel il est prévu l'unité $(20_i)$ de rechiffrement pour effectuer un rechiffrement en combinant logiquement, suivant un OU EXCLUSIF, un bit chiffré de l'ordre i+1 à une clé $t_i$ de rechiffrement, la clé $t_i$ de rechiffrement pouvant être calculée au moyen d'une combinaison logique OU EXCLUSIF du paramètre $k_i$ de rechiffrement pour l'ordre i et du paramètre $k_{i+i}$ de rechiffrement pour l'ordre i+1.

**7.** Multiplicateur sans propagation de retenue suivant la revendication 6, dans lequel l'unité $(20_i)$ de rechiffrement pour l'ordre i et l'additionneur $(16_i)$ complet de bits un pour l'ordre i sont combinés et ont un dispositif de calcul d'un bit $s'_i$ de somme chiffré par lequel l'équation suivante peut être réalisée :

$$s_i = s'_{i+1} \oplus b'_i \oplus c'_i \oplus t_i,$$

$s'_i$ étant un bit de somme chiffré de l'ordre i ; $s'_{i+1}$ étant un bit de somme chiffré de l'ordre i+1 ; $b'_i$ étant un bit d'opérandes chiffré du deuxième opérande de l'ordre i ; $c'_i$ étant un bit de retenue chiffré de l'ordre i et $t_i$ étant une clé de rechiffrement pour l'ordre i qui peut être calculée par une combinaison logique OU EXCLUSIF d'un paramètre $k_i$ de chiffrement pour l'ordre i et d'un paramètre $k_{i+1}$ de chiffrement pour l'ordre i+1.

**8.** Multiplicateur sans propagation de retenue suivant la revendication 5, 6 ou 7, dans lequel le dispositif $(20_i)$ de rechiffrement pour l'ordre i et l'additionneur $(16_i)$ complet de bits un pour l'ordre i sont combinés et ont un dispositif de calcul d'un bit $(c'^{out}_i)$ de retenue chiffré par lequel l'équation suivante peut être réalisée :

$$c'^{out}_i = [s'_{i+1} \oplus t_i]b_i' + c_i' \, [s'_{i+1} \oplus t_i] + c_i'b_i'$$

$s'_i$ étant un bit de somme chiffré de l'ordre i ; $s'_{i+1}$ étant un bit de somme chiffré de l'ordre i+1 ; $b'_i$ étant un bit d'opérandes chiffré du deuxième opérande de l'ordre i ; $c'^{out}_i$ étant un bit de retenue chiffré de l'ordre i et $t_i$ étant une clé de rechiffrement pour l'ordre i qui peut être calculée par une combinaison logique OU EXCLUSIF d'un paramètre $k_i$ de chiffrement pour l'ordre i et d'un paramètre $k_{i+1}$ de chiffrement pour l'ordre i+1.

FIG 1

$$t_i = k_{i+1} \oplus k_i$$

FIG 2

$$s_i^` = s_{i+1}^` \oplus t_i \oplus b_i^` \oplus c_i^`$$

**FIG 3**

$$c_i^{`out} = [s_{i+1}^` \oplus t_i] \cdot b_i^` + c_i^` \cdot [s_{i+1}^` \oplus t_i] + c_i^` \cdot b_i^`$$

**FIG 4**

ALU

FIG 5a

# ADD OPERATION

| | $k_n$ | | $a_n$ | $b_n$ | $c_n$ | | $a_{kn}$ | $b_{kn}$ | $c_{kn}$ | | cp | | ck | | VERGLEICH DER ÜBERTRÄGE |
|---|---|---|---|---|---|---|---|---|---|---|---|---|---|---|---|
| 0 | 0 | | 0 | 0 | 0 | | 0 | 0 | 0 | | 0 | | 0 | | 1 |
| 1 | 0 | | 0 | 0 | 1 | | 0 | 0 | 1 | | 0 | | 0 | | 1 |
| 2 | 0 | | 0 | 1 | 0 | | 0 | 1 | 0 | | 0 | | 0 | | 1 |
| 3 | 0 | | 0 | 1 | 1 | | 0 | 1 | 1 | | 1 | | 1 | | 1 |
| 4 | 0 | | 1 | 0 | 0 | | 1 | 0 | 0 | | 0 | | 0 | | 1 |
| 5 | 0 | | 1 | 0 | 1 | | 1 | 0 | 1 | | 1 | | 1 | | 1 |
| 6 | 0 | | 1 | 1 | 0 | | 1 | 1 | 0 | | 1 | | 1 | | 1 |
| 7 | 0 | | 1 | 1 | 1 | | 1 | 1 | 1 | | 1 | | 1 | | 1 |
| 8 | 1 | | 0 | 0 | 0 | | 1 | 1 | 1 | | 0 | | 0 | | 1 |
| 9 | 1 | | 0 | 0 | 1 | | 1 | 1 | 0 | | 0 | | 0 | | 1 |
| 10 | 1 | | 0 | 1 | 0 | | 1 | 0 | 1 | | 0 | | 0 | | 1 |
| 11 | 1 | | 0 | 1 | 1 | | 1 | 0 | 0 | | 1 | | 1 | | 1 |
| 12 | 1 | | 1 | 0 | 0 | | 0 | 1 | 1 | | 0 | | 0 | | 1 |
| 13 | 1 | | 1 | 0 | 1 | | 0 | 1 | 0 | | 1 | | 1 | | 1 |
| 14 | 1 | | 1 | 1 | 0 | | 0 | 0 | 1 | | 1 | | 1 | | 1 |
| 15 | 1 | | 1 | 1 | 1 | | 0 | 0 | 0 | | 1 | | 1 | | 1 |

FIG 5b

EP 1 449 066 B1

FIG 6 (STAND DER TECHNIK)

$c_i^{out} \; s_i$ = 1-BIT VOLLADDIERER